# EUROPEAN PATENT APPLICATION

(11) **EP 4 832 296 A1**
(43) Date of publication of application: **28.10.2026**
(21) Application number: 24919601.5
(22) Date of filing: 15.05.2024
(51) Int. Cl.: H02J 7/00, H02H 7/18

(54) **CONTROL BOX FOR BATTERY AND CONTROL METHOD THEREFOR, BATTERY MANAGEMENT SYSTEM, AND ENERGY STORAGE SYSTEM**

(30) Priority: 23.01.2024 CN 202410092025
(71) Applicant: Contemporary Amperex Technology Co., Limited, Ningde, Fujian 352100 (CN)
(72) Inventor: GUO, Xiaoqiang, Ningde, Fujian 352100 (CN); HONG, Jiarong, Ningde, Fujian 352100 (CN); LI, Zhonghong, Ningde, Fujian 352100 (CN); ZHOU, Linggang, Ningde, Fujian 352100 (CN)
(74) Representative: Lorenz Seidler Gossel Part. mbB
(86) International application number: PCT/CN2024/093263
(87) International publication number: WO 2025/156513

(57) **Abstract**

The present application provides a control box for a battery and a control method therefor, a battery management system, and an energy storage system, said control box comprising an electrical isolator switch, the electrical isolator switch being connected between a battery and a high-voltage power supply and being configured to, on the basis of manual operation or control of a battery management system of the battery, disconnect the connection between the battery and the high-voltage power supply. The electrical isolator switch is provided with both a manual operation mode and an electrical operation mode, and, on the basis of manual operation or on the basis of control of the battery management system, can disconnect the connection between the battery and the high-voltage power supply. Moreover, the electrical isolator switch can replace a manual isolator switch and a high-voltage contactor in a traditional control box, thus solving the problems present in the traditional control box such as blind spots for current protection, sticking between the high-voltage contactor and the manual isolator switch, heat generation by the high-voltage contactor, and complex circuit connection inside of the control box, and providing the battery with more reliable protection.

## Description

### CROSS-REFERENCE TO RELATED APPLICATION

The present application claims priority to Chinese patent application No. 202410092025.2, entitled "CONTROL BOX FOR BATTERY AND CONTROL METHOD THEREOF, BATTERY MANAGEMENT SYSTEM, AND ENERGY STORAGE SYSTEM" and filed on January 23, 2024, which is incorporated herein by reference in its entirety.

### TECHNICAL FIELD

The present application relates to the field of batteries, and in particular, to a control box for a battery and a control method thereof, a battery management system (BMS), and an energy storage system.

### BACKGROUND

When a short circuit, grounding, or other faults occur in the battery system, causing an abnormal current thereof, the power supply must be cut off immediately to ensure the safety of the battery system. Typically, a control box is connected between the battery and the high-voltage power supply, which can be used to control the connection and disconnection between the battery and the high-voltage power supply, thereby realizing functions such as fault current protection. Therefore, how to improve the performance of the control box is a problem to be solved.

### SUMMARY

The present application provides a control box for a battery and a control method thereof, a battery management system (BMS), and an energy storage system.

In a first aspect, a control box for a battery is provided. The control box includes an electric disconnecting switch, and the electric disconnecting switch is connected between the battery and a high-voltage power supply, and configured to disconnect, based on manual operation or control of a BMS of the battery, the battery from the high-voltage power supply.

The electric disconnecting switch is disposed in the control box of the present application. The electric disconnecting switch has both a manual operation mode and an electric operation mode, and can disconnect, based on the manual operation or the control of the BMS, the battery from the high-voltage power supply, thereby being capable of replacing a manual disconnecting switch and a high-voltage contactor in a traditional control box, which solves the problems in the traditional control box, such as a blind zone for current protection, adhesion between the high-voltage contactor and the manual disconnecting switch, the high-voltage contactor generating heat, and complex wiring connection inside the control box. When the current of the battery is abnormal, a high-voltage circuit between the battery and the high-voltage power supply can be cut off in time, thereby providing more reliable protection for the battery.

In one possible implementation, the electric disconnecting switch includes a first switch connected between a positive electrode of the battery and a positive electrode of the high-voltage power supply, and a second switch connected between a negative electrode of the battery and a negative electrode of the high-voltage power supply, and the first switch and the second switch are configured to open simultaneously or close simultaneously.

Since a positive high-voltage circuit and a negative high-voltage circuit of the battery are each provided with a switch, and the switches on the positive high-voltage circuit and the negative high-voltage circuit are configured to close or open simultaneously, the reliability of the electric disconnecting switch is further improved. When the current of the battery is abnormal, the high-voltage circuit between the battery and the high-voltage power supply can be cut off in time.

In one possible implementation, the control box further includes a pyro fuse, the pyro fuse is connected between the positive electrode of the battery and the positive electrode of the high-voltage power supply, or connected between the negative electrode of the battery and the negative electrode of the high-voltage power supply, and the pyro fuse is configured to disconnect, based on the control of the BMS, the battery from the high-voltage power supply.

In this implementation, the pyro fuse is disposed in the control box. When the current of the battery is abnormal, the pyro fuse can cut off, under the control of the BMS, the connection between the battery and the high-voltage power supply in time, and can work with the electric disconnecting switch to provide reliable protection for the battery. Furthermore, since the pyro fuse has a wider operating current range, the blind zone for current protection that exists in the traditional control box can also be eliminated.

In one possible implementation, the control box further includes a high-voltage fuse, configured to blow when the current of the battery is abnormal, so as to disconnect the battery from the high-voltage power supply, where the pyro fuse is connected between the positive electrode of the battery and the positive electrode of the high-voltage power supply, and the high-voltage fuse is connected between the negative electrode of the battery and the negative electrode of the high-voltage power supply; alternatively, the pyro fuse is connected between the negative electrode of the battery and the negative electrode of the high-voltage power supply, and the high-voltage fuse is connected between the positive electrode of the battery and the positive electrode of the high-voltage power supply.

In this implementation, the high-voltage fuse can be retained on either the positive high-voltage circuit or the negative high-voltage circuit of the battery. The high-voltage fuse provides additional protection for the control box. The high-voltage fuse can disconnect, without being controlled by the BMS, the battery from the high-voltage power supply by means of blowing when the current is abnormal, thereby achieving multiple protections for the battery.

In one possible implementation, the control box is connected to the BMS, and the BMS is configured to control the electric disconnecting switch to open when the current of the battery is abnormal and the abnormal current is less than or equal to a first current threshold.

In this implementation, the first current threshold is set. For example, the first current threshold can be determined based on the operating current range of the electric disconnecting switch, such that the electric disconnecting switch can give play to the functions thereof when the abnormal current of the battery does not exceed the first current threshold, thereby eliminating the abnormal current by cutting off, through the electric disconnecting switch, the connection between the battery and the high-voltage power supply.

In one possible implementation, the BMS is further configured to detect whether the abnormal current is eliminated; and to control the pyro fuse in the control box to open when the abnormal current is not eliminated.

In this implementation, if the BMS controls the electric disconnecting switch to open, but the abnormal current is not eliminated due to faults such as adhesion of the electric disconnecting switch or other reasons, the BMS can control the pyro fuse to open, and then protect the battery through the pyro fuse.

In one possible implementation, the BMS is further configured to control the pyro fuse in the control box to open when the current of the battery is abnormal and the abnormal current is between the first current threshold and a second current threshold, the second current threshold being greater than the first current threshold.

In this implementation, the BMS can control the pyro fuse to open when the abnormal current is detected and the abnormal current is between the first current threshold and the second current threshold, so as to provide more effective protection for the battery directly through the pyro fuse, thereby giving full play to the function of the pyro fuse.

In one possible implementation, the control box further includes a pre-charging resistor, and the electric disconnecting switch further includes a third switch, with one end of the pre-charging resistor connected to the third switch and the other end connected to the first switch or the second switch.

In this implementation, the pre-charging resistor is disposed in the control box, and the pre-charging resistor protects electrical components in the control box by limiting the magnitude of the charging and discharging current, thereby preventing damage to the battery system. The electric disconnecting switch also includes the third switch connected in series with the pre-charging resistor, which is configured to replace the high-voltage contactor connected in series with the pre-charging resistor in the traditional control box, thereby reducing the complexity of the wiring inside the control box and reducing heat dissipation.

In a second aspect, a control method of a control box for a battery is provided. The control box includes an electric disconnecting switch, and the electric disconnecting switch is connected between the battery and a high-voltage power supply. The control method includes: detecting whether a current of the battery is abnormal; and controlling the electric disconnecting switch to open when the current of the battery is abnormal.

The electric disconnecting switch is disposed in the control box of the present application. The electric disconnecting switch has both a manual operation mode and an electric operation mode, and can disconnect, based on the manual operation or the control of the BMS, the battery from the high-voltage power supply, thereby being capable of replacing a manual disconnecting switch and a high-voltage contactor in a traditional control box, which solves the problems in the traditional control box, such as a blind zone for current protection, adhesion between the high-voltage contactor and the manual disconnecting switch, the high-voltage contactor generating heat, and complex wiring connection inside the control box. When the current of the battery is abnormal, a high-voltage circuit between the battery and the high-voltage power supply can be cut off in time, thereby providing more reliable protection for the battery. In order to protect the battery by the control box, it is necessary to detect whether the current of the battery is abnormal, and control the electric disconnecting switch to open when the current is abnormal, so as to cut off the connection between the battery and the high-voltage power supply.

In one possible implementation, controlling the electric disconnecting switch to open when the current of the battery is abnormal includes: controlling the electric disconnecting switch to open when the current of the battery is abnormal and the abnormal current is less than or equal to a first current threshold.

In this implementation, the first current threshold is set. For example, the first current threshold can be determined based on the operating current range of the electric disconnecting switch, such that the electric disconnecting switch can give play to the functions thereof when the abnormal current of the battery does not exceed the first current threshold, thereby eliminating the abnormal current by cutting off, through the electric disconnecting switch, the connection between the battery and the high-voltage power supply.

In one possible implementation, the electric disconnecting switch includes a first switch connected between a positive electrode of the battery and a positive electrode of the high-voltage power supply, and a second switch connected between a negative electrode of the battery and a negative electrode of the high-voltage power supply, and the first switch and the second switch are configured to open simultaneously or close simultaneously.

Since a positive high-voltage circuit and a negative high-voltage circuit of the battery are each provided with a switch, the reliability of the electric disconnecting switch is further improved. When the current of the battery is abnormal, the high-voltage circuit between the battery and the high-voltage power supply can be cut off in time.

In one possible implementation, the control box further includes a pyro fuse, the pyro fuse is connected between the positive electrode of the battery and the positive electrode of the high-voltage power supply, or connected between the negative electrode of the battery and the negative electrode of the high-voltage power supply. The control method further includes: controlling the pyro fuse to open when the current of the battery is abnormal and the abnormal current is between the first current threshold and a second current threshold, the second current threshold being greater than the first current threshold.

In this implementation, the BMS can control the pyro fuse to open when the abnormal current is detected and the abnormal current is between the first current threshold and the second current threshold, so as to provide more effective protection for the battery directly through the pyro fuse, thereby giving full play to the function of the pyro fuse.

In one possible implementation, the control method further includes: detecting whether the abnormal current is eliminated; and controlling the pyro fuse in the control box to open when the abnormal current is not eliminated.

In this implementation, if the BMS controls the electric disconnecting switch to open, but the abnormal current is not eliminated due to faults such as adhesion of the electric disconnecting switch or other reasons, the BMS can control the pyro fuse to open, and then protect the battery through the pyro fuse.

In one possible implementation, the control box further includes a high-voltage fuse, configured to blow when the current of the battery is abnormal, so as to disconnect the battery from the high-voltage power supply, where the pyro fuse is connected between the positive electrode of the battery and the positive electrode of the high-voltage power supply, and the high-voltage fuse is connected between the negative electrode of the battery and the negative electrode of the high-voltage power supply; alternatively, the pyro fuse is connected between the negative electrode of the battery and the negative electrode of the high-voltage power supply, and the high-voltage fuse is connected between the positive electrode of the battery and the positive electrode of the high-voltage power supply.

In this implementation, the high-voltage fuse can be retained on either the positive high-voltage circuit or the negative high-voltage circuit of the battery. The high-voltage fuse provides additional protection for the control box. The high-voltage fuse can disconnect, without being controlled by the BMS, the battery from the high-voltage power supply by means of blowing when the current is abnormal, thereby achieving multiple protections for the battery.

In one possible implementation, the control box further includes a pre-charging resistor, and the electric disconnecting switch further includes a third switch, with one end of the pre-charging resistor connected to the third switch and the other end connected to the first switch or the second switch.

In this implementation, the pre-charging resistor is disposed in the control box, and the pre-charging resistor protects electrical components in the control box by limiting the magnitude of the charging and discharging current, thereby preventing damage to the battery system. The electric disconnecting switch also includes the third switch connected in series with the pre-charging resistor, which is configured to replace the high-voltage contactor connected in series with the pre-charging resistor in the traditional control box, thereby reducing the complexity of the wiring inside the control box and reducing heat dissipation.

In a third aspect, a BMS is provided, including a memory and a processor, where the memory is configured to store instructions, and the processor is configured to execute the instructions so as to implement the control method in the second aspect and any possible implementation of the second aspect.

In a fourth aspect, an energy storage system is provided, including a battery, the BMS in the third aspect or any possible implementation of the third aspect, and the control box in the first aspect or any possible implementation of the first aspect.

### BRIEF DESCRIPTION OF DRAWINGS

In order to explain technical solutions of embodiments of the present application more clearly, a brief introduction of drawings to be used in the embodiments of the present application will be made below. Apparently, the drawings described below show merely some embodiments of the present application, and other drawings can be obtained according to these drawings by those of ordinary skill in the art without creative labor.
FIG. 1 is an architecture diagram of a traditional control box.
FIG. 2 is an architecture diagram of a control box according to an embodiment of the present application.
FIG. 3 is a schematic flowchart of a control method according to an embodiment of the present application.
FIG. 4 is a flowchart of a possible specific implementation of the control method shown in FIG.3.
FIG. 5 is a schematic block diagram of a battery management system (BMS) according to an embodiment of the present application.

### DETAILED DESCRIPTION

Embodiments of the present application are further described in detail below with reference to the accompanying drawings and embodiments. The following detailed description of the embodiments and the drawings are used to illustrate the principles of the present application by way of example, but should not be used to limit the scope of the present application, that is, the present application is not limited to the described embodiments.

The positional terms in the following description correspond to the directions shown in the drawings and are not intended to limit the specific structure of the present application. In the description of the present application, it needs to be further noted that, unless otherwise expressly specified and limited, terms "mounted," "connected," and "connection" should be understood in a broad sense, for example, as a fixed connection, as a detachable connection, or as an integral connection; and as a direct connection, as an indirect connection through an intermediate medium. For those of ordinary skills in the art, the specific meanings of the above terms in the present application may be understood according to specific circumstances.

A reference to "embodiment" in the present application means that a particular feature, structure, or characteristic described in conjunction with an embodiment may be included in at least one embodiment of the present application. The appearance of the phrase in various places in the specification does not necessarily refer to the same embodiment, nor is it a separate or alternative embodiment that is mutually exclusive with other embodiments. It is understood explicitly and implicitly by those skilled in the art that the embodiments described in the present application may be combined with other embodiments.

In the present application, the term "and/or" is only an association relationship for describing associated objects, indicating that three relationships may exist. For example, A and/or B may represent three situations: A exists alone, both A and B exist, and B exists alone. In addition, the character "/" in the present application generally means that the associated objects before and after it are in an "or" relationship.

When a short circuit, grounding, or other faults occur in the battery system, causing an abnormal current thereof, the power supply must be cut off immediately to ensure the safety of the battery system. Typically, a control box is connected between the battery and the high-voltage power supply, which can be used to control the connection and disconnection between the battery and the high-voltage power supply, thereby realizing functions such as fault current protection.

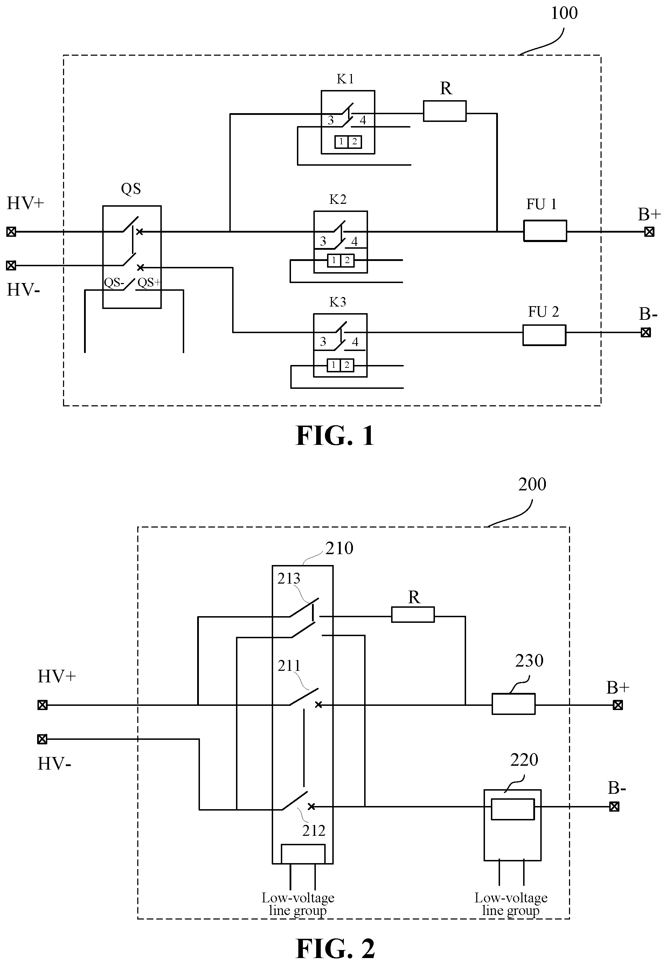

For example, as shown in FIG. 1, a control box 100 is connected between a battery and a high-voltage power supply, where a positive electrode and a negative electrode of the high-voltage power supply are HV+ and HV-, respectively, and a positive electrode and a negative electrode of the battery are B+ and B-, respectively. The control box 100 includes a manual disconnecting switch QS and high-voltage contactors K1, K2 and K3. The high-voltage contactor K1 is connected in series with a pre-charging resistor R, and the high-voltage contactors K2 and K3 are connected in a positive high-voltage circuit and a negative high-voltage circuit, respectively. Here, a high-voltage circuit between the positive electrode B+ of the battery and the positive electrode HV+ of the high-voltage power supply is called the positive high-voltage circuit, and a high-voltage circuit between the negative electrode B- of the battery and the negative electrode HV- of the high-voltage power supply is called the negative high-voltage circuit. In addition, a high-voltage fuse FU 1 and a high-voltage fuse FU 2 are disposed in the high-voltage positive circuit and the high-voltage negative circuit, respectively.

High-voltage fuses K1, K2, and K3 serve as electronic devices used to protect the circuit, and can cut off the circuit when the current exceeds the specified value. K2 and K3 are set to close or open simultaneously, so that the positive high-voltage circuit and the negative high-voltage circuit can be cut off simultaneously when the current of the battery is abnormal. K1, as a pre-charging contact controller, can control the on/off state of a pre-charging circuit. The pre-charging resistor R in the pre-charging circuit mainly plays a current limiting role and is usually configured to slowly charge a capacitor to avoid damage caused by an instantaneous current to components such as the capacitor and the contactor.

The manual disconnecting switch QS is configured to isolate the high-voltage power supply. Between a battery that needs to be repaired and the high-voltage power supply, the manual disconnecting switch QS can establish a clear disconnection point, thereby disconnecting the battery from the high-voltage power supply and ensuring that maintenance personnel are protected against the electric shock accident during equipment maintenance.

The high-voltage fuses FU 1 and FU 2 are usually connected in series in the circuit. When the current of the battery is abnormal, the high-voltage fuse uses the heat generated by itself to quickly melt a fusible link, thereby cutting off the circuit and ensuring the safety of the battery.

The following problems may exist with the above-mentioned control box 100. First, the operating current range of the high-voltage contactors K1 to K3 is typically 0 to 900 A, while the operating current range of high-voltage fuses FU 1 and FU 2 is typically greater than 2000 A, thus creating a blind zone for current protection of 900 A to 2000 A. Second, the configuration of the manual disconnecting switch QS with the high-voltage contactors K1 to K3 may lead to adhesion between them, thus failing to effectively cut off the main circuit. Furthermore, the excessive number of switches complicates the wiring connection inside the control box 100, increasing the number of connecting copper bars. Finally, due to the long service life of the high-voltage contactors K1 to K3, when the control box 100 is used in an energy storage system, the probability of frequently cutting off the high-voltage circuit in the energy storage system is relatively low, this results in the overabundance of mechanical performances in the high-voltage contactors K1 to K3, leading to a mismatch between mechanical performances and electrical performances. Additionally, the high-voltage contactors K1 to K3 may generate a significant amount of heat during use.

Therefore, the present application provides a control box, aiming to improve the performance of the control box by replacing the manual disconnecting switch QS and the high-voltage contactors K1 to K3 with an electric disconnecting switch. The control box in the embodiment of the present application is applicable to any battery system, especially to the energy storage system, so as to protect energy storage batteries in the energy storage system.

FIG. 2 shows a control box 200 for a battery according to an embodiment of the present application. As shown in FIG. 2, the control box 200 includes an electric disconnecting switch 210. The electric disconnecting switch 210 is connected between the battery and a high-voltage power supply. The electric disconnecting switch 210 is configured to disconnect, based on manual operation or control by a control module, the battery from the high-voltage power supply. The control module may be a battery management system (BMS) of the battery.

As shown in FIG. 2, a positive electrode and a negative electrode of the high-voltage power supply are HV+ and HV-, respectively, and a positive electrode and a negative electrode of the battery are B+ and B-, respectively. In the embodiment of the present application, a high-voltage circuit between the positive electrode B+ of the battery and the positive electrode HV+ of the high-voltage power supply is called a positive high-voltage circuit, and a high-voltage circuit between the negative electrode B- of the battery and the negative electrode HV- of the high-voltage power supply is called a negative high-voltage circuit. The positive high-voltage circuit and the negative high-voltage circuit form a main circuit of the battery. In addition, other circuits, such as a pre-charging circuit connected in parallel with the positive high-voltage circuit and the negative high-voltage circuit, are further disposed in the control box 200. The pre-charging circuit includes, for example, a pre-charging resistor and a switch connected in series with the same.

The electric disconnecting switch 210 is disposed in the control box 200 in the embodiment of the present application. The electric disconnecting switch has both a manual operation mode and an electric operation mode, and can disconnect, based on the manual operation or the control of the BMS, the battery from the high-voltage power supply, thereby being capable of replacing the manual disconnecting switch QS and the high-voltage contactors K1-K3 in a traditional control box, such as the control box 100 shown in FIG. 1, which thus solves the problems in the traditional control box, such as a blind zone for current protection, adhesion between the high-voltage contactor and the manual disconnecting switch, the high-voltage contactor generating heat, and complex wiring connection inside the control box. When the current of the battery is abnormal, a high-voltage circuit between the battery and the high-voltage power supply can be cut off in time, thereby providing more reliable protection for the battery. The electric disconnecting switch 210 can be regarded as an integrated switch combining the manual disconnecting switch and the high-voltage contactor.

Specifically, the electric disconnecting switch 210 has both the manual operation mode and the electric operation mode. In the electric operation mode, the electric disconnecting switch can open or close according to a control signal sent by the BMS. For example, when detecting that the current of the battery is abnormal, the BMS can send the control signal to the electric disconnecting switch 210 to control the electric disconnecting switch 210 to open, thereby disconnecting the battery from the high-voltage power supply and realizing the function of the high-voltage contactor in the traditional control box. In the manual operation mode, operators can manually operate the electric disconnecting switch to open, and for example, in scenarios like power outages or maintenance, the battery can be thoroughly disconnected from the high-voltage power supply, thereby protecting the operators against the electric shock accident and realizing the function of the manual disconnecting switch in the traditional control box.

The operating current range of the electric disconnecting switch 210 is typically 0 to 3500 A. Compared to the current range of 0 to 900 A for the high-voltage contactor, this significantly reduces the blind zones for current protection between 900 A and 2000 A in the traditional control box. Furthermore, the electric disconnecting switch 210 has a long enough service life for the application in the energy storage system, and is free of the problem of the overabundance of mechanical performances of the high-voltage contactor, which is conducive to the balance between the mechanical endurance and the electrical endurance. In addition, since the electric disconnecting switch 210 replaces the manual disconnecting switch and the high-voltage contactor in the traditional control box, the problem of failure caused by adhesion between the manual disconnecting switch and the high-voltage contactor is avoided. At the same time, the complexity of the wiring connection in the control box and heat generation caused by the high-voltage contactor are reduced, and the cost of the components is also reduced.

As can be seen, in the embodiment of the present application, the electric disconnecting switch 210 is used to replace the manual disconnecting switch and the high-voltage contactor in the traditional control box, which can significantly improve the performance of the control box 200, thereby making the control box 200 more applicable to the energy storage system so as to protect the energy storage batteries in the energy storage system.

In some embodiments, the electric disconnecting switch 210 includes a first switch 211 connected between the positive electrode B+ of the battery and the positive electrode HV+ of the high-voltage power supply, and a second switch 212 connected between the negative electrode B-of the battery and the negative electrode HV- of the high-voltage power supply, and the first switch 211 and the second switch 212 are configured to open simultaneously or close simultaneously.

In this way, since the positive high-voltage circuit and the negative high-voltage circuit of the battery are each provided with a switch, and the switches on the positive high-voltage circuit and the negative high-voltage circuit are configured to close or open simultaneously, the reliability of the electric disconnecting switch 210 is further improved. When the current of the battery is abnormal, the high-voltage circuit between the battery and the high-voltage power supply can be cut off in time.

In some embodiments, the control box 200 further includes a pyro fuse 220, the pyro fuse 220 is connected between the positive electrode B+ of the battery and the positive electrode HV+ of the high-voltage power supply, and/or connected between the negative electrode B- of the battery and the negative electrode HV- of the high-voltage power supply. The pyro fuse 220 is configured to disconnect, based on control of the BMS, the battery from the high-voltage power supply.

For example, as shown in FIG. 2, the pyro fuse 220 is disposed on the negative high-voltage circuit and connected in series with the second switch 212. When the current of the battery is abnormal, the pyro fuse 220 can cut off, under the control of the BMS, the connection between the battery and the high-voltage power supply in time, and can work with the electric disconnecting switch 210 to provide reliable protection for the battery. Since the pyro fuse 220 can be switched on and off based on triggering of the BMS, compared with the high-voltage fuse, the pyro fuse can reduce maloperation during normal overload and quickly cut off the current in the event of a real current fault, thus having higher reliability. Furthermore, since the pyro fuse 220 has a wider operating current range, for example, the operating current range thereof is 0 to 16,000 A, the blind zone for current protection that exists in traditional control box can also be eliminated.

It can be understood that one or two pyro fuses 220 may be disposed in the control box 200 in the embodiment of the present application. In FIG. 2, the high-voltage fuse in the negative high-voltage circuit of the traditional control box is replaced with the pyro fuse 220. In other cases, the high-voltage fuse in the positive high-voltage circuit of the traditional control box can also be replaced with the pyro fuse 220, or both the high-voltage fuses in the positive high-voltage circuit and the negative high-voltage circuit of the traditional control box can be replaced with the corresponding pyro fuse 220.

In some embodiments, the control box 200 further includes a high-voltage fuse 230, configured to disconnect the battery from the high-voltage power supply when the current of the battery is abnormal. Specifically, the pyro fuse 220 is connected between the positive electrode B+ of the battery and the positive electrode HV+ of the high-voltage power supply, and the high-voltage fuse 230 is connected between the negative electrode B- of the battery and the negative electrode HV- of the high-voltage power supply; alternatively, the pyro fuse 220 is connected between the negative electrode B- of the battery and the negative electrode HV- of the high-voltage power supply, and the high-voltage fuse 230 is connected between the positive electrode B+ of the battery and the positive electrode HV+ of the high-voltage power supply.

For example, as shown in FIG. 2, the high-voltage fuse 230 is disposed on the positive high-voltage circuit, and the pyro fuse 220 is disposed on the negative high-voltage circuit. Since the high-voltage fuse 230 has both high voltage-withstanding capability and large current-carrying capacity, the high-voltage fuse can also work normally in high voltage and large current environments. The high-voltage fuse 230 is retained on the positive high-voltage circuit or the negative high-voltage circuit of the battery. The high-voltage fuse 230 provides additional protection for the control box 200. Especially in scenarios with a larger fault current, the high-voltage fuse can quickly disconnect, without being controlled by the BMS, the battery from the high-voltage power supply by means of blowing when the current is abnormal, thereby providing stronger protection for the battery.

In some embodiments, as shown in FIG. 2, the control box 200 further includes a pre-charging resistor R, and the electric disconnecting switch 210 further includes a third switch 213, with one end of the pre-charging resistor R connected to the third switch 213, and the other end connected to the first switch 211 or the second switch 212.

The pre-charging resistor R is disposed in the control box 200, and the pre-charging resistor protects electrical components in the control box 200 by limiting the magnitude of the charging and discharging current, thereby preventing damage to the battery system. The electric disconnecting switch 210 also includes the third switch 213 connected in series with the pre-charging resistor R, which is configured to replace the high-voltage contactor connected in series with the pre-charging resistor in the traditional control box, thereby similarly reducing the complexity of the wiring inside the control box 200 and reducing heat dissipation.

In the embodiment of the present application, since the electric disconnecting switch 210 and the pyro fuse 220 in the control box 200 need to be switched on and off by driving, a low-voltage line group may be disposed in the control box 200 to establish connection with the BMS of the battery. The low-voltage line group can be configured to transmit a feedback signal and a control signal, so that the BMS can control, based on a preset control strategy, the on/off state of the electric disconnecting switch 210 and the pyro fuse 220.

For example, the BMS can control the electric disconnecting switch 210 to open when the current of the battery is abnormal and the abnormal current is less than or equal to a first current threshold.

Furthermore, the BMS can also detect whether the abnormal current is eliminated, and then control the pyro fuse 220 to open when the abnormal current is not eliminated.

For example, the BMS can also control the pyro fuse 220 to open when the current of the battery is abnormal and the abnormal current is between the first current threshold and a second current threshold. At this point, the electric disconnecting switch 210 can be controlled to be kept closed.

For another example, when the current of the battery is greater than the second current threshold, the connection between the battery and the high-voltage power supply can be cut off by the high-voltage fuse 230 by means of blowing. Optionally, the blowing time of the high-voltage fuse 230 can be set in conjunction with the control strategy of the BMS.

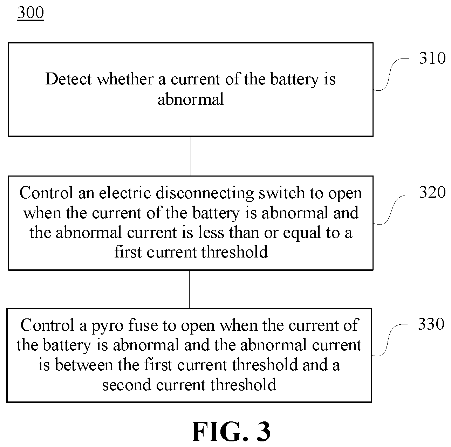

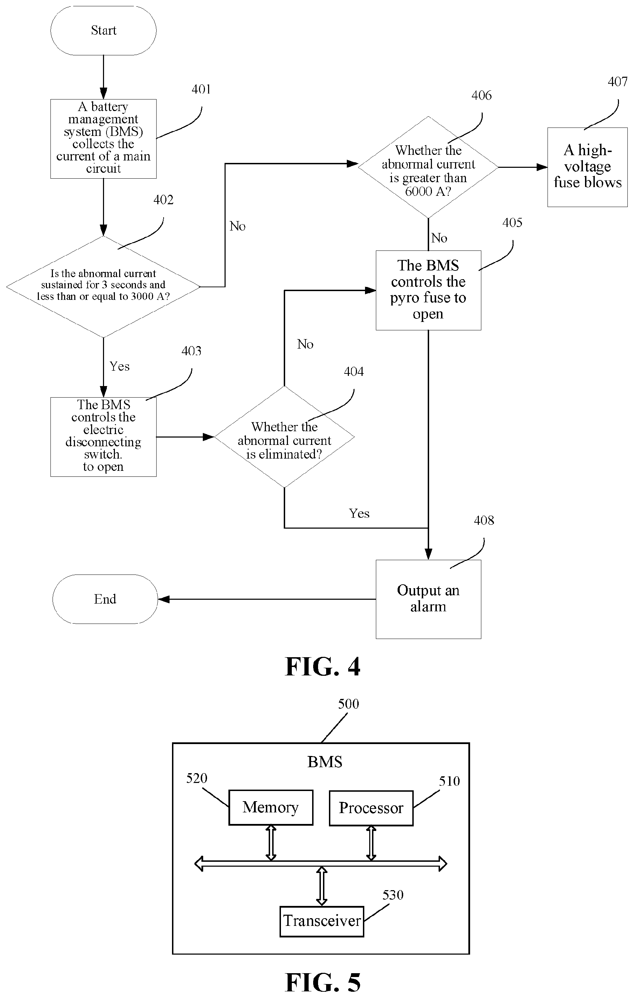

To more clearly illustrate how the BMS controls components such as the electric disconnecting switch 210 and the pyro fuse 220 in the control box 200 to achieve fault current protection, a control method 300 of the control box 200 for a battery according to the embodiment of the present application is described in detail below with reference to FIG. 3 and FIG. 4. The control method 300 may be executed by a control module, such as the BMS of the battery. The control method 300 may include some or all of the following steps.

In step 310, whether the current of the battery is abnormal is detected.

In step 320, the electric disconnecting switch 210 is controlled to open when the current of the battery is abnormal.

After replacing the manual disconnecting switch and the high-voltage contactor in the traditional control box with the electric disconnecting switch 210, in order to protect the battery by the control box 200, the closing and opening of the electric disconnecting switch 210 needs to be controlled by the BMS. For example, it is necessary for the BMS to detect whether the current of the battery is abnormal, and control the electric disconnecting switch 210 to open when the current is abnormal, so as to cut off the connection between the battery and the high-voltage power supply.

In some embodiments, as shown in FIG. 3, in step 310, whether the current of the battery is abnormal is detected; and in step 320, when the current of the battery is abnormal and the abnormal current is less than or equal to a first current threshold, the BMS controls the electric disconnecting switch 210 to open.

The first current threshold can be set with reference to the operating current range of the electric disconnecting switch 210, for example, the first current threshold can be set in the range of 2500 A to 3500 A, for example 3000 A, such that the electric disconnecting switch 210 can give play to the functions thereof when the abnormal current of the battery does not exceed the first current threshold, thereby eliminating the abnormal current by cutting off, through the electric disconnecting switch 210, the connection between the battery and the high-voltage power supply.

Optionally, one time duration can be preset, so that when the abnormal current is sustained for the time duration and does not exceed the first current threshold, the electric disconnecting switch 210 is controlled to open, thereby avoiding maloperation caused by current fluctuations. For example, the time duration can be between 1 second and 5 seconds, such as 3 seconds.

If the electric disconnecting switch 210 is not completely opened due to contact adhesion or other reasons, or the abnormal current is not eliminated for other reasons, then, optionally, after step 320, the BMS also needs to detect whether the abnormal current is eliminated, and control the pyro fuse 220 to open when the abnormal current is not eliminated.

In some embodiments, as shown in FIG. 3, the control method 300 further includes step 330.

In step 330, the pyro fuse 220 is controlled to open when the current of the battery is abnormal and the abnormal current is between the first current threshold and a second current threshold. At this point, the electric disconnecting switch 210 can be kept closed.

The second current threshold is less than the first current threshold. The second current threshold can be set with further reference to the operating current range of the pyro fuse 220 and the high-voltage fuse 230. For example, the second current threshold can be set to be greater than 5000 A, such as equal to 6000 A, so that when the abnormal current of the battery is between the first current threshold and the second current threshold, the pyro fuse 220 can exert the functions thereof, so as to cut off the connection between the battery and the high-voltage power supply through the pyro fuse 220, thereby eliminating the abnormal current. When the abnormal current exceeds the second current threshold, the connection between the battery and the high-voltage power supply is cut off by means of the blowing of the high-voltage fuse 230, thereby giving full play to the high voltage-withstanding capacity and large current-carrying capacity of the high-voltage fuse 230, and achieving more reliable protection for the battery.

As an example, FIG. 4 shows a schematic flowchart of the control strategy implemented by the BMS for the control box 200 according to the embodiment of the present application. As shown in FIG. 4, in step 401, the BMS collects the current of the main circuit.

In step 402, the BMS detects an abnormal current and determines whether the abnormal current is sustained for more than 3 seconds and is less than 3000 A.

If the abnormal current is sustained for more than 3 seconds and is less than or equal to 3000 A, step 403 is performed; otherwise, step 406 is performed.

In step 403, the electric disconnecting switch 210 is controlled to open.

The BMS can send the control signal to the electric disconnecting switch 210 via the low-voltage line group to drive the electric disconnecting switch 210 to open. The state of the electric disconnecting switch 210 can be monitored through a feedback contact thereof. The feedback contact can inform the BMS of the state of the electric disconnecting switch 210 through a low-voltage line, so that the BMS can know whether the electric disconnecting switch 210 is successfully opened.

In step 404, the BMS detects whether the abnormal current is eliminated.

The abnormal current mentioned here refers to the current that exceeds the safe current range. Correspondingly, whether the abnormal current is eliminated means whether the current of the battery returns to the safe current range. If the current returns to the safe current range, it is considered that the abnormal current is eliminated. If the abnormal current still exceeds the safe current range, it is considered that the abnormal current is not eliminated.

If the abnormal current is not eliminated, step 405 is performed; if the abnormal current is eliminated, step 408 is performed.

It can be understandable that in step 404, the BMS can obtain the current information of the main circuit to determine whether the abnormal current is eliminated. In addition, the BMS can determine, based on the information fed back by the contact regarding whether the electric disconnecting switch 210 is closed, whether to perform step 405. For example, when the electric disconnecting switch 210 fails to open successfully due to contact adhesion, it can be determined that step 405 needs to be continued.

If the abnormal current is sustained for more than 3 seconds and exceeds 3000 A in step 403, or when the abnormal current is not eliminated in step 404, step 405 is performed.

In step 405, the pyro fuse 220 is controlled to open.

The BMS can send the control signal to the pyro fuse 220 via the low-voltage line group to drive the electric disconnecting switch 210 to open. The state of the pyro fuse 220 can be monitored through the feedback contact thereof. The feedback contact can inform the BMS of the state of the pyro fuse 220 through the low-voltage line, so that the BMS knows whether the pyro fuse 220 is successfully opened.

In step 406, whether the abnormal current exceeds 6000 A is determined.

If the abnormal current does not exceed 6000 A, that is, the abnormal current is within the range of 3000 A to 6000 A, then step 405 is performed to control the pyro fuse 220 to open.

In step 407, the high-voltage fuse 230 is opened.

It should be noted that the position of step 407 is for illustrative purposes only. The opening of the high-voltage fuse 230 in step 407 may not be controlled by the BMS. It may occur before or after any of the aforementioned steps, or it may occur simultaneously with any of the aforementioned steps.

Of course, the blowing time of the high-voltage fuse 230 can also be set according to actual needs to achieve the customized high-voltage fuse 230. For example, based on the control strategy of the BMS, the high-voltage fuse 230 can be set to blow after a certain period of time, and during this period of time, fault current protection can be achieved by opening the electric disconnecting switch 210 and/or the pyro fuse 220.

In step 408, an alarm is output.

As can be seen from FIG. 4, the electric disconnecting switch 210, the pyro fuse 220, and the high-voltage fuse 230 are disposed in the control box 200. Through a reasonable control strategy, the BMS controls the electric disconnecting switch 210 and the pyro fuse 220 to cut off the fault current for different fault current ranges, so that the functions of the electric disconnecting switch 210 and the pyro fuse 220 can be fully utilized. Combined with the high-voltage fuse 230, the battery is protected in multiple ways, making the fault current protection of the battery more reliable.

The present application further provides a BMS 500. As shown in FIG. 5, the BMS 500 includes a processor 510 and a memory 520, where the memory 520 is configured to store instructions, and the processor 510 is configured to read the instructions and implement, based on the instructions, the aforementioned control method 300 according to various embodiments of the present application. The memory 520 may be a separate device independent of the processor 510, or may be integrated into the processor 510.

Optionally, as shown in FIG. 5, the BMS 500 may further include a transceiver 530, and the processor 510 can control the transceiver 530 to communicate with other apparatuses or systems such as the control box 200. For example, a signal may be sent to other apparatuses or systems, and signals sent by other apparatuses or systems are received.

It should be understood that the specific methods by which the BMS 500 controls the control box 200 and the beneficial effects thereof can refer to the above-mentioned related description of the control method 300, which will not be repeated here for the sake of simplicity.

The present application further provides a computer-readable storage medium, configured to store a computer program, where the computer program, when executed by a computing device, causes the computing device to implement the control method 300 in any of the above-mentioned embodiments. Alternatively, the computer program may be a computer program in the BMS.

The present application further provides an energy storage system. The energy storage system includes a battery, the BMS 500, and the control box 200, where the control box 200 is connected between the battery and a high-voltage power supply.

It can be understood that the processor in the embodiment of the present application may be an integrated circuit chip with signal processing capability. In implementation, each step of the above-mentioned method embodiment can be completed by an integrated logic circuit of hardware in the processor or instructions in the form of software. The above-mentioned processor can be a general-purpose processor, a digital signal processor (DSP), an application specific integrated circuit (ASIC), a field programmable gate array (FPGA) or other programmable logic devices, discrete gate or transistor logic devices, and discrete hardware components. Various methods, steps and logical block diagrams disclosed in the embodiments of the present application may be implemented or executed. The general-purpose processor may be a microprocessor or may be any conventional processor. The steps of the method disclosed with reference to the embodiments of the present application may be directly executed by a hardware decoding processor, or may be executed by a combination of hardware and software modules in a decoding processor. The software module may be located in a random access memory, a flash memory, a read-only memory, a programmable read-only memory, or an electrically erasable programmable memory, a register, or the like mature storage media in the art. The storage medium is located in the memory, and the processor reads information in the memory and completes the steps in the above-mentioned method in combination with hardware thereof.

In addition, in the embodiments of the present application, the memory may be a volatile memory or a non-volatile memory, or may include both the volatile memory and the non-volatile memory. The non-volatile memory may be a read-only memory (ROM), a programmable ROM (PROM), an erasable PROM (EPROM), an electrically EPROM (EEPROM), or a flash memory. The volatile memory may be a random access memory (RAM), which is used as an external cache. By way of example and not limitation, many forms of RAMs are available, such as Static RAM (SRAM), Dynamic RAM (DRAM), Synchronous DRAM (SDRAM), Double Data Rate SDRAM (DDR SDRAM), Enhanced SDRAM (ESDRAM), Synchlink DRAM (SLDRAM), and Direct Rambus RAM (DR RAM). It is to be noted that the memories in the system and method described herein include, but are not limited to, these and any other appropriate types of memory.

In the embodiments of the present application, the magnitudes of the serial numbers of the steps do not imply the order of execution. The execution order of the steps should be determined by the functions and internal logics thereof, and should not constitute any limitation on the implementation processes of the embodiments of the present application.

Those of ordinary skill in the art can realize that units and algorithm steps of each example described with reference to the embodiments disclosed herein can be implemented in electronic hardware, or a combination of computer software and electronic hardware. Whether these functions are performed in hardware or software depends on a specific application and a design constraint condition of the technical solution. Those skilled in the art may implement the described functions using different methods for each particular application, but such implementations should not be considered beyond the scope of the present application.

In the several embodiments provided in the present application, it should be understood that the disclosed system, apparatus, and method may be implemented in other manners. For example, the apparatus embodiments described above are only illustrative. For example, dividing of units is only a kind of logical function dividing, and there may be other dividing modes in actual implementation. For example, the plurality of units or components can be combined or integrated into another system, or some features can be ignored or not executed. In addition, the displayed or discussed mutual couplings or direct couplings or communication connections may be implemented through some interfaces. The indirect couplings or communication connections between the apparatuses or units may be implemented in electronic, mechanical, or other forms.

The present application has been described with reference to the preferred embodiments; however, various modifications may be made and components thereof may be replaced with equivalents without departing from the scope of the present application. In particular, the technical features mentioned in the various embodiments can be combined in any manner as long as there is no structural conflict. The present application is not limited to the specific embodiments disclosed herein, but rather includes all technical solutions falling within the scope of the claims.

## Claims

1. A control box for a battery, wherein the control box comprises an electric disconnecting switch, the electric disconnecting switch is connected between the battery and a high-voltage power supply, and the electric disconnecting switch is configured to disconnect, based on manual operation or control of a battery management system (BMS) of the battery, the battery from the high-voltage power supply;
wherein the electric disconnecting switch comprises a first switch connected between a positive electrode of the battery and a positive electrode of the high-voltage power supply, and a second switch connected between a negative electrode of the battery and a negative electrode of the high-voltage power supply, and the first switch and the second switch are configured to open simultaneously or close simultaneously; and
the control box further comprises a pyro fuse, the pyro fuse is connected between the positive electrode of the battery and the positive electrode of the high-voltage power supply, or connected between the negative electrode of the battery and the negative electrode of the high-voltage power supply, and the pyro fuse is configured to disconnect, based on the control of the BMS, the battery from the high-voltage power supply.

2. The control box according to claim 1, wherein the control box further comprises a high-voltage fuse, configured to blow when a current of the battery is abnormal, so as to disconnect the battery from the high-voltage power supply,
wherein the pyro fuse is connected between the positive electrode of the battery and the positive electrode of the high-voltage power supply, and the high-voltage fuse is connected between the negative electrode of the battery and the negative electrode of the high-voltage power supply; alternatively, the pyro fuse is connected between the negative electrode of the battery and the negative electrode of the high-voltage power supply, and the high-voltage fuse is connected between the positive electrode of the battery and the positive electrode of the high-voltage power supply.

3. The control box according to claim 1 or 2, wherein the control box is connected to the BMS, the BMS being configured to,
control the electric disconnecting switch to open when the current of the battery is abnormal and the abnormal current is less than or equal to a first current threshold.

4. The control box according to claim 3, wherein the BMS is further configured to,
detect whether the abnormal current is eliminated; and
control the pyro fuse in the control box to open when the abnormal current is not eliminated.

5. The control box according to claim 3, wherein the BMS is further configured to,
control the pyro fuse in the control box to open when the current of the battery is abnormal and the abnormal current is between the first current threshold and a second current threshold, the second current threshold being greater than the first current threshold.

6. The control box according to claim 1 or 2, wherein the control box further comprises a pre-charging resistor, and the electric disconnecting switch further comprises a third switch, with one end of the pre-charging resistor connected to the third switch and the other end connected to the first switch or the second switch.

7. A control method of a control box for a battery, wherein the control box comprises an electric disconnecting switch, the electric disconnecting switch is connected between the battery and a high-voltage power supply, and the control method comprises:
detecting whether a current of the battery is abnormal; and
controlling the electric disconnecting switch to open when the current of the battery is abnormal;
wherein the electric disconnecting switch comprises a first switch connected between a positive electrode of the battery and a positive electrode of the high-voltage power supply, and a second switch connected between a negative electrode of the battery and a negative electrode of the high-voltage power supply, and the first switch and the second switch are configured to open simultaneously or close simultaneously; and
the control box further comprises a pyro fuse, the pyro fuse is connected between the positive electrode of the battery and the positive electrode of the high-voltage power supply, or connected between the negative electrode of the battery and the negative electrode of the high-voltage power supply, and the control method further comprises:
controlling the pyro fuse to open when the current of the battery is abnormal and the abnormal current is between a first current threshold and a second current threshold, the second current threshold being greater than the first current threshold.

8. The control method according to claim 7, wherein the controlling the electric disconnecting switch to open when the current of the battery is abnormal comprises:
controlling the electric disconnecting switch to open when the current of the battery is abnormal and the abnormal current is less than or equal to the first current threshold.

9. The method according to claim 8, wherein the control method further comprises:
detecting whether the abnormal current is eliminated; and
controlling the pyro fuse in the control box to open when the abnormal current is not eliminated.

10. The control method according to any one of claims 7 to 9, wherein the control box further comprises a high-voltage fuse, configured to blow when the current of the battery is abnormal, so as to disconnect the battery from the high-voltage power supply,
wherein the pyro fuse is connected between the positive electrode of the battery and the positive electrode of the high-voltage power supply, and the high-voltage fuse is connected between the negative electrode of the battery and the negative electrode of the high-voltage power supply; alternatively, the pyro fuse is connected between the negative electrode of the battery and the negative electrode of the high-voltage power supply, and the high-voltage fuse is connected between the positive electrode of the battery and the positive electrode of the high-voltage power supply.

11. The control method according to any one of claims 7 to 9, wherein the control box further comprises a pre-charging resistor, and the electric disconnecting switch further comprises a third switch, with one end of the pre-charging resistor connected to the third switch and the other end connected to the first switch or the second switch.

12. A BMS, comprising a processor and a memory, wherein the memory is configured to store instructions, and the processor is configured to execute the instructions to implement the control method of a control box according to any one of claims 7 to 11.

13. An energy storage system, comprising:
a battery;
the BMS according to claim 12; and
the control box according to any one of claims 1 to 6.
